# EUROPEAN PATENT SPECIFICATION

(11) **EP 0 564 757 B1**
(45) Date of publication and mention of the grant of the patent: **11.09.1996**
(21) Application number: 92870036.8
(22) Date of filing: 06.03.1992
(51) Int. Cl.: C11D 3/37, B01D 19/04

(54) **Suds controlling detergent compositions**
Schaum kontrollierende Waschmittelzusammensetzungen
Compositions détergentes pour régler la mousse

(43) Date of publication of application: 13.10.1993
(73) Proprietor: THE PROCTER & GAMBLE COMPANY, Cincinnati, Ohio 45202 (US)
(72) Inventor: Jeuniaux, Etienne Maria Betty Andre, B-1785 Merchtem (BE)
(74) Representative: Canonici, Jean-Jacques

(56) References cited:
- EP-A- 0 246 007
- EP-A- 0 353 388
- DE-A- 2 031 827
- FR-A- 2 091 821
- FR-A- 2 148 939
- US-A- 4 798 679

## Description

### Technical Field

The present invention relates to suds controlling compositions and stable liquid detergent compositions containing them.

### Background

It has become common practice in the detergent industry to include in detergent compositions materials which are intended to control the amount of foam produced during a washing cycle in a washing machine.

Silicone antifoam agents in finely dispersed form have been found to be particularly effective species, and efforts have been directed towards increasing the stability of such agents upon prolonged storage in liquid detergent compositions containing them.

Silicone antifoam agents are described in FR-A-2 091 821, DE-A-2 031 827, FR-A-2 148 939, EP-A-353 388 and EP-A-246 007.

However, it has found to be difficult to create and maintain the finely dispersed form of the silicone antifoam agents in liquid detergent compositions, especially in a high ionic strength medium.

In U.S. 4,798,679, it has been proposed to make a premix of dispersing agents and suds controlling agents to obtain storage benefits.

Surprisingly, it has now been found that improved storage stability of suds controlling agents in liquid detergent compositions can be achieved by adding to said agents a polymer-based latex. According to the present invention, a suds controlling composition is provided which has improved stability upon storage when incorporated into liquid detergents.

According to another embodiment of the present invention, a stable liquid detergent composition comprising said suds controlling composition is provided.

According to still another embodiment of the present invention, a process is provided to obtain stable liquid detergent compositions comprising the suds controlling composition of the present invention.

### Summary of the Invention

The present invention provides suds controlling composition for inclusion in a detergent composition in liquid form, comprising a silicone antifoam agent, a carrier material, a dispersant and a polymer-based latex.

The present invention also provides liquid detergent compositions comprising said suds controlling composition, surface-active agents and optionally other detergent ingredients.

### Detailed Description of the Invention

### The silicone antifoam agent

In industrial practice, the term "silicone" has become a generic term which encompasses a variety of relatively high-molecular-weight polymers containing siloxane units and hydrocarbyl groups of various types. Generally, the silicone antifoam agent can be described as siloxanes having the general structure : 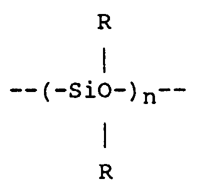 wherein n is from 20 to 2.000, and where each R independently can be an alkyl or an aryl radical. Examples of such substituents are methyl, ethyl, propyl, isobutyl, and phenyl. Preferred polydiorganosiloxanes are polydimethylsiloxanes having trimethylsilyl endblocking units and having a viscosity at 25°C of from 5 x 10⁻⁵ m²/s to 0.1 m²/s i.e. a value of n in the range 40 to 1500. These are preferred because of their ready availability and their relatively low cost.

A preferred type of silicone antifoam agent useful in the compositions herein comprises a mixture of an alkylated siloxane of the type hereinabove disclosed and solid silica.

The solid silica can be a fumed silica, a precipitated silica or a silica made by the gelformation technique. The silica particles can be rendered hyrophobic by treating them with dialkylsilane groups and/or trialkylsilane groups either bonded directly onto the silica or by means of silicone resin.
A preferred antifoam agent comprises a hydrophobic silanated, most preferably trimethylsilanated silica having a particle size in the range from 10 nanometer to 20 nanometer and a specific surface area above 50 m²/g.
Silicone antifoam agents employed in the suds controlling composition suitable for the present invention have an amount of silica in the range of 1 to 30%, more preferably from 1 to 20% by weight of the total weight of the silicone antifoam resulting in silicone antifoams having an average viscosity in the range from 2 x 10⁻⁴m²/s to 1m²/s.
Preferred silicone antifoams may have a viscosity in the range of from 5 x 10⁻³m²/s to 0.1 m²/s.
Particularly suitable are silicone antifoams with a viscosity of 2 x 10⁻²m²/s or 4.5 x 10⁻²m²/s.

Examples of suitable silicone antifoam agent which are commercially available are QCF2-3329®, QCF2-3421®, Q2-3302® manufactured by Dow Corning.

The silicone antifoam agent is present in the suds controlling composition at levels of from 2% to 20% by weight, preferably 5% to 10% by weight of the suds controlling composition.

### The carrier material

The suds controlling composition of the present invention comprise the silicone anti-foam agent in the form of a dispersion in a water-soluble or water-dispersable organic carrier.

Suitable organic carriers are nonionic surfactants. Preferably, the nonionic surfactants are ethoxylated surfactants. In general, ethoxylated nonionic surfactants suitable herein have an average ethyleneoxy content in the range from 35% to 70% and especially from 50% to 62.5% by weight of the surfactant.

Examples of suitable nonionic surfactants include the condensation products of primary or secondary aliphatic alcohols having from 8 to 24 carbon atoms, in either straight chain or branched chain configuration, with from 2 to 18 moles of alkylene oxide per mole of alcohol. Preferably, the aliphatic alcohol comprises between 9 and 15 carbon atoms and is ethoxylated with between 2 and 9, desirably between 3 and 8 moles of ethylene oxide per mole of aliphatic alcohol.
Most preferred are alkoxylated nonionic surfactants having an average HLB in the range from 9.5 to 13.5, especially 10 to 12.5. Highly suitable nonionic surfactants of this type are ethoxylated primary C9-15 alcohols having an average degree of ethoxylation from 2 to 9, more preferably from 3 to 8.

The carrier is present in the suds controlling composition at levels from 30% to 95% by weight, preferably 80% to 90% by weight of the total suds controlling composition.

### Dispersant

The suds controlling composition of the present invention comprises a dispersing agent.

The dispersing agent disperses or helps disperse the silicone antifoam agent uniformly so that stable, preferably isotropic, detergent formulas can be prepared. The dispersing agent is premixed with the silicone antifoam agent prior to incorporation into the liquid detergent composition.

Suitable dispersing agents include materials such as ethylene oxide adducts of linear or arylphenols having from 8 to 20 carbon atoms per molecule, such as lauryl polyoxethylene glycol ether, stearyl polyoxyethylene, glycol ether, cetyl polyoxyethylene glycol ether, and nonylphenol polyoxyethylene glycol ether, and also ethylene oxide adducts of linear or branched monocarboxylic acids and having HLBs of greater than about 13.5, preferably greater than about 14. Preferably, such addition products have short hydrophilic chains containing 12 or preferably less carbon atoms and from about 8 to about 15 ethylene oxide units per molecule. Other examples of preferred dispersants are polyoxyethylene glycol sorbitan esters or polyoxyethylene glycol sorbital esters having HLB values of 14 or more, such as polyoxyethylene glycol sorbitan hexaoleate or polyoxyethylene sorbitol hexaoleate. Additional examples of preferred dispersants are fatty acid mono-,di-, and/or polyglycerides and sodium or calcium stearoyl lactate, diglycerol stearate, and sorbitan monostearate. The suds controlling composition of the present invention can contain a single type of dispersant or mixtures of at least two different types of dispersants.

Other useful dispersants are commercial oxyethylated polyhydric alcohols or their derivatives or similar compounds having an active hydrogen atom, as well as fatty acid esters of glycerol or sorbitol.

Anionic emulsifiers, such as sodium dodecylbenzene-sulphonate or sodium laurylsulphate, can also be used, but preferably with a solvent.

Preferred is an emulsifier mixture of oxyethylated fatty alcohol and oxyethylated triglyceride having an HLB value preferably in the range from about 14 to 16.

The preferred solvent for dimethylpolysiloxane is tetrameric or pentameric cyclomethicone. Particularly preferred dispersants for use herein are cyclomethicone and C9-C11 linear chain alcohols ethoxylated with from about 7 to about 10 moles of ethylene oxide per mole of alcohol especially when the unreacted alcohol and monoethoxylated alcohol are removed and mixtures thereof.
The most preferred dispersants are mixtures of silicone glycol copolymers and cyclomethicone compounds. Examples of said mixtures which are commercially available are DC3225C® manufactured by Dow Corning.
The amount of dispersant is from 1% to 20%, preferably from 1% to 5% by weight of the suds controlling composition.

### The polymer-based latex

The silicone antifoam compounds, as described hereinabove, must be present in the liquid detergent compositions in finely dispersed form in order to be effective. However, the particles of the antifoam agent present in the liquid detergent composition tend to coagulate upon storage, thereby becoming less efficient antifoam agents.

According to the present invention, it has been found that improved stability of the silicone antifoam compounds can be achieved by adding small amounts of polymer-based latex to the silicone antifoam compounds. The concept of "stability" as used herein is in the context of maintaining the silicone antifoam agent in finely dispersed form.

The addition of low levels of polymer-based latex reduces the coalescence of the silicone antifoam particles so that stable detergent formulas can be prepared. The polymer-based latex consists of finely divided particles of polymer dispersed in a surfactant matrix. The polymer-based latices are mainly prepared by polymerizing low moleculair weight monomers in a free radical emulsion polymerisation system.

Suitable monomers that can be used to make the polymer-based latex are styrene, C1-C4 alkyl acrylate, ethylene, butadiene, vinylchloride, vinylidene chloride or mixtures thereof.

Preferred polymer-based latices for use in the present invention are polystyrene-based latices comprising homo-and copolymers of polystyrene. Examples of such polystyrene-based latices are commercially known as Lytron 631®, comprising 40% of polystyrene raw material dispersed in nonionic surfactant solution.

Other suitable polymer-based latices are butadiene-styrene, butadiene-acrylonitrille, butadiene-styrene-acrylonitrile and chloroprene based latices .
The polymer present in the polymer-based latex typically has a particle size from 50 to 300 nanometer, preferably from 50 to 200 nanometer. By "size" herein is meant average particle diameter for substantially spherical particles, or the size of the largest diameter or dimension for nonspherical particles Preferably, the polymer present in the polymer -based latex has a small particle size distribution.
Preferred particle sizes distributions can be chosen such that 80% of all the particles have a particle size varying between 80% and 120% of the average particle size . Most preferred particle size distributions have 90% of all particles varying between 80% and 120% of the average particle size.
The polymer-based latex is present in the suds controlling composition preferable from 1% to 40%, preferably from 1% to 15% by weight of the suds controlling composition.
The level of the polymer-based latex, present in the liquid detergent composition is preferable from 0.01% to 0.12%, more preferable from 0.01% to 0.08% by weight of the total detergent composition.

In terms of processing, the compounds of the suds controlling composition are premixed before incorporation into the liquid detergent composition. The suds controlling composition of the present invention is made by mixing the silicone antifoam agent,the carrier material, the dispersant and the polymer - based latex in a high shear mixer. The high shear mix can be prepared using any conventional high shear mixing equipment. The suds controlling composition of the present invention can also be incorporated in detergent additive products.
Such additive products are intended to supplement or boost the performance of conventional detergent compositions and may contain any of the components of such compositions.

The liquid detergent compositions comprising the suds controlling composition of the present invention is made by mixing the suds controlling composition together with detergent ingredients. The liquid detergent compositions comprising the suds controlling composition can be provided having various ratios and proportions of the detergent additives.

The amount of suds controlling composition in the liquid detergent composition can be varied, depending upon the suds profile desired by the formulation. The level of the suds controlling composition is preferably present from 0.8% to 3.0% by weight of the total detergent composition.

### Detergent ingredients

In another embodiment of the present invention, a liquid detergent composition is provided comprising the suds controlling composition of the present invention mixed with detergent ingredients. Detergent ingredients include surfactants, builders and optional detergent additives. A wide range of surfactants can be used in the detergent composition of the present invention.

A typical listing of anionic, nonionic, ampholytic and zwitterionic classes, and species of these surfactants, is given in US Patent 3,664,961 issued to Norris on May 23, 1972.

Mixtures of anionic surfactants are particularly suitable herein, especially mixtures of sulphonate and sulphate surfactants in a weight ratio of from 5:1 to 1:2, preferably from 3:1 to 2:3, more preferably from 3:1 to 1:1. Preferred sulphonates include alkyl benzene sulphonates having from 9 to 15, especially 11 to 13 carbon atoms in the alkyl radical, and alpha-sulphonated methyl fatty acid esters in which the fatty acid is derived from a C₁₂-C₁₈ fatty source preferably from a C₁₆-C₁₈ fatty source. In each instance the cation is an alkali metal, preferably sodium. Preferred sulphate surfactants are alkyl sulphates having from 12 to 18 carbon atoms in the alkyl radical, optionally in admixture with ethoxy sulphates having from 10 to 20, preferably 10 to 16 carbon atoms in the alkyl radical and an average degree of ethoxylation of 1 to 6. Examples of preferred alkyl sulphates herein are tallow alkyl sulphate, coconut alkyl sulphate, and C₁₄₋₁₅ alkyl sulphates. The cation in each instance is again an alkali metal cation, preferably sodium.

One class of nonionic surfactants useful in the present invention are condensates of ethylene oxide with a hydrophobic moiety to provide a surfactant having an average hydrophilic-lipophilic balance (HLB) in the range from 8 to 17, preferably from 9.5 to 13.5, more preferably from 10 to 12.5. The hydrophobic (lipophilic) moiety may be aliphatic or aromatic in nature and the length of the polyoxyethylene group which is condensed with any particular hydrophobic group can be readily adjusted to yield a water-soluble compound having the desired degree of balance between hydrophilic and hydrophobic elements.

Especially preferred nonionic surfactants of this type are the C₉-C₁₅ primary alcohol ethoxylates containing 3-8 moles of ethylene oxide per mole of alcohol, particularly the C₁₄-C₁₅ primary alcohols containing 6-8 moles of ethylene oxide per mole of alcohol and the C₁₂-C₁₄ primary alcohols containing 3-5 moles of ethylene oxide per mole of alcohol.

Another class of nonionic surfactants comprises alkyl polyglucoside compounds of general formula

RO (CₙH₂ₙO)ₜZₓ

wherein Z is a moiety derived from glucose; R is a saturated hydrophobic alkyl group that contains from 12 to 18 carbon atoms; t is from 0 to 10 and n is 2 or 3; x is from 1.3 to 4, the compounds including less than 10% unreacted fatty alcohol and less than 50% short chain alkyl polyglucosides. Compounds of this type and their use in detergent are disclosed in EP-B 0 070 077, 0 075 996 and 0 094 118.

Also suitable as nonionic surfactants are poly hydroxy fatty acid amide surfactants of the formula 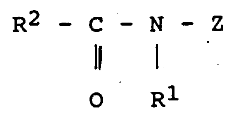 wherein R¹ is H, or R¹ is C₁₋₄ hydrocarbyl, 2-hydroxy ethyl, 2-hydroxy propyl or a mixture thereof, R² is C₅₋₃₁ hydrocarbyl, and Z is a polyhydroxyhydrocarbyl having a linear hydrocarbyl chain with at least 3 hydroxyls directly connected to the chain, or an alkoxylated derivative thereof. Preferably, R¹ is methyl, R² is a straight C₁₁₋₁₅ alkyl or alkenyl chain such as coconut alkyl or mixtures thereof, and Z is derived from a reducing sugar such as glucose, fructose, maltose, lactose, in a reductive amination reaction.

The compositions according to the present invention may further comprise a builder system. Any conventional builder system is suitable for use herein including aluminosilicate materials, silicates, polycarboxylates and fatty acids, materials such as ethylenediamine tetraacetate, metal ion sequestrants such as aminopolyphosphonates, particularly ethylenediamine tetramethylene phosphonic acid and diethylene triamine pentamethylenephosphonic acid. Though less preferred for obvious environmental reasons, phosphate builders can also be used herein.
Suitable builders can be an inorganic ion exchange material, commonly an inorganic hydrated aluminosilicate material, more particularly a hydrated synthetic zeolite such as hydrated zeolite A, X, B or HS.
Another suitable inorganic builder material is layered silicate, e.g. SKS-6® (Hoechst). SKS-6® is a crystalline layered silicate consisting of sodium silicate (Na₂Si₂O₅).
Suitable polycarboxylates builders for use herein include citric acid, preferably in the form of a water-soluble salt, derivatives of succinic acid of the formula R-CH(COOH)CH2(COOH) wherein R is C10-20 alkyl or alkenyl, preferably C12-16, or wherein R can be substituted with hydroxyl, sulfo sulfoxyl or sulfone substituents. Specific examples include lauryl succinate , myristyl succinate, palmityl succinate,-dodecenylsuccinate, 2-tetradecenyl succinate. Succinate builders are preferably used in the form of their water-soluble salts, including sodium, potassium, ammonium and alkanolammonium salts.
Other suitable polycarboxylates are oxodisuccinates and mixtures of tartrate monosuccinic and tartrate disuccinic acid such as described in US 4,663,071.
Especially suitable fatty acid builders for use herein are saturated or unsaturated C10-18 fatty acids, as well as the corresponding soaps. Preferred saturated species have from 12 to 16 carbon atoms in the alkyl chain. The preferred unsaturated fatty acid is oleic acid. Another preferred builder system for liquid compositions is based on dodecenyl succinic acid.
Other suitable water-soluble organic salts are the homo- or co-polymeric acids or their salts, in which the polycarboxylic acid comprises at least two carboxyl radicals separated from each other by not more than two carbon atoms.
Polymers of this type are disclosed in GB-A-1,596,756. Examples of such salts are polyacrylates of MW 2000-5000 and their copolymers with maleic anhydride, such copolymers having a molecular weight of from 20,000 to 70,000, especially about 40,000.

Detergency builder salts are normally included in amounts of from 100% to 80% by weight of the composition preferably from 20% to 70% and most usually from 30% to 60% by weight.

Other components used in detergent compositions may be employed, such enzymes and stabilizers or activators therefore, soil-suspending agents soil-release agents, optical brighteners, abrasives, bactericides, tarnish inhibitors, coloring agents, and perfumes.

The liquid compositions according to the present invention can also be in "compact form", in such case, the liquid detergent compositions according to the present invention will contain a lower amount of water, compared to conventional liquid detergents.

### Test procedure

To assess the stabilizing effect of the added polymer-based latex, the stability of the suds controlling compositions incorporated in liquid detergent compositions are compared in the absence and presence of the polymer-based latex. More in particular, the stability of polydimethyl siloxane/fumed silica was determined in the absence and in the presence of polystyrene latex. (Lytron 631®)
The stability of the samples were measured after several periods of storage at 21°C. The stability was determined by visual inspection of the samples :
Liquid detergent compositions according to the present invention, containing the finely dispersed form of the silicone antifoam agent have a translucent appearance.
Coalescence of the particles of the silicone antifoam agent causes flocculation of said particles, resulting in a change of visual appearance of the bulk solution from translucent to transparent.

The following examples are meant to exemplify compositions of the present inventions, but are not necessarily meant to limit the scope of the invention.

A liquid detergent composition according to the present invention is prepared, having the following compositions :

| % by weight of the total detergent composition | | |
|---|---|---|
| | I | II |
| Linear alkylbenzene sulfonate | 10 | 15 |
| Alkyl sulphate | 4 | |
| Fatty alcohol (C₁₂-C₁₅) ethoxylate | 9 | 14 |
| Fatty acid | 5 | 10 |
| Oleic acid | 4 | |
| Citric acid | 5 | 9 |
| KOH | | 3 |
| NaOH | 5.4 | |
| Monoethanolamine | | 9 |
| Propanediol | 1.5 | 9 |
| Ethanol | 5 | 1 |
| Minors | up to 100 | |

The above compositions I and II were each supplemented by the suds controlling compositions A and B (Table I). The components of the suds controlling composition were premixed before being added to the liquid detergent compositions. The stability of the samples IA, IB, IIA, IIB were determined after several weeks of storage at 21°C

**TABLE I**

| Ingredients | Percentage by weight of the total detergent composition | |
|---|---|---|
| | A | B |
| Polydimethyl siloxane/fumed silica | 0.2 | 0.2 |
| Dispersant | 0.07 | 0.07 |
| Noniomic | 1.8 | 1.8 |
| Polystyrene latex | 0 | 0.08 |

### Results :

| | IA | IB |
|---|---|---|
| Fresh | -homogeneously dispersed -translucent | -homogeneously dispersed -translucent |
| 1wk | -homogeneously dispersed -translucent | -homogeneously dispersed -translucent |
| 3wk | -flocculation | -homogeneously dispersed -translucent |
| 6wk | -increased flocculation -transparent | -homogeneously dispersed -translucent |

| | IIA | IIB |
|---|---|---|
| Fresh | -homogeneously dispersed | -homogeneously dispersed -translucent |
| 1wk | -homogeneously dispersed | -homogeneously dispersed -translucent |
| 3wk | -flocculation | -homogeneously dispersed -translucent |
| 6wk | -increased flocculation transparent | -homogeneously dispersed -translucent |

In absence of the polymer-based latex the finely dispersed silicone antifoam agent starts to agglomerate and flocculate upon storage, resulting in a transparent liquid.
In the presence of polymer-based latex, the finely dispersed silicone antifoam agent remains homogeneously dispersed in the liquid, resulting in a translucent liquid.
As can be seen from the results, the addition of low levels of polystyrene based latex greatly improves the stability of the finely dispersed silicone antifoam agent in the liquid detergent composition even upon long periods of storage.

## Claims

1. A liquid detergent composition comprising a surface active agent and a suds controlling composition, said suds controlling composition comprising a silicone antifoam agent present from 2 to 20% by weight of the suds controlling composition, a water soluble or water dispersible organic carrier material present from 30 to 95% by weight of the suds controlling composition and a dispersing agent present from 1 to 20% by weight of the suds controlling composition and a polymer-based latex characterized in that the polymer-based latex is present from 0,01 to 0,12% by weight of the total detergent composition.

2. A liquid detergent composition according to claim 1 wherein said polymer-based latex is a polystyrene-based latex.

3. A liquid detergent composition according to claim 1 wherein the carrier material is a nonionic surfactant.

4. A liquid detergent composition according to claim 3 wherein said nonionic surfactant is an ethoxylated nonionic surfactant.

5. A liquid detergent composition according to claim 3 wherein said nonionic surfactant is an ethoxylated nonionic surfactant.

6. A liquid detergent composition according to claims 1-5 further comprising surfactants, builders and other optional detergent ingredients.

7. A process for making a liquid detergent composition according to claims 1-6 wherein the compounds of the suds controlling composition are premixed before being incorporated into the liquid detergent composition.

8. A liquid detergent composition according to claims 1-6 which is in the form of an additive.

## Patentansprüche

1. Flüssige Detergenzzusammensetzung, umfassend ein grenzflächenaktives Mittel und eine schaumkontrollierende Zusammensetzung, welche schaumkontrollierende Zusammensetzung ein Antischaummittel auf Silikonbasis, welches in einer Menge von 2 Gew.-% bis 20 Gew.-% der schaumkontrollierenden Zusammensetzung vorhanden ist, ein wasserlösliches oder wasserdispergierbares organisches Trägermaterial, welches in einer Menge von 30 Gew.-% bis 95 Gew.-% der schaumkontrollierenden Zusammensetzung vorliegt, und ein Dispergiermittel, welches in einer Menge von 1 Gew.-% bis 20 Gew.-% der schaumkontrollierenden Zusammensetzung vorhanden ist, und einen auf Polymer basierenden Latex umfaßt, welche dadurch gekennzeichnet ist, daß der auf Polymer basierende Latex in einer Menge von 0,01 Gew.-% bis 0,12 Gew.-% der gesamten Detergenzzusammensetzung vorliegt.

2. Flüssige Detergenzzusammensetzung nach Anspruch 1, wobei der genannte auf Polymer basierende Latex ein auf Polystyrol basierender Latex ist.

3. Flüssige Detergenzzusammensetzung nach Anspruch 1, wobei das Trägermaterial ein nichtionisches grenzflächenaktives Mittel ist.

4. Flüssige Detergenzzusammensetzung nach Anspruch 3, wobei das genannte nichtionische grenzflächenaktive Mittel ein ethoxyliertes nichtionisches grenzflächenaktives Mittel ist.

5. Flüssige Detergenzzusammensetzung nach Anspruch 3, wobei das genannte nichtionische grenzflächenaktive Mittel ein ethoxyliertes nichtionisches grenzflächenaktives Mittel ist.

6. Flüssige Detergenzzusammensetzung nach den Ansprüchen 1 bis 5, welche ferner grenzflächenaktive Mittel, Gerüststoffe und andere fakultative Detergenzbestandteile umfaßt.

7. Verfahren zur Herstellung einer flüssigen Detergenzzusammensetzung nach den Ansprüchen 1 bis 6, wobei die Verbindungen der schaumkontrollierenden Zusammensetzung vorvermischt werden, bevor sie in die flüssige Detergenzzusammensetzung einverleibt werden.

8. Flüssige Detergenzzusammensetzung nach den Ansprüchen 1 bis 6, welche in der Form eines Zusatzgemisches vorliegt.

## Revendications

1. Composition détergente liquide comprenant un agent tensioactif et une composition limitant le moussage, ladite composition limitant le moussage comprenant un agent antimousse de type silicone, présent à raison de 2 à 20% en poids de la composition limitant le moussage, un véhicule organique soluble dans l'eau ou dispersible dans l'eau, présent à raison de 30 à 95% en poids de la composition limitant le moussage, et un agent dispersant présent à raison de 1 à 20% en poids de la composition limitant le moussage, et un latex à base de polymère, caractérisée en ce que le latex à base de polymère est présent à raison de 0,01 à 0,12% en poids de la composition détergente totale.

2. Composition détergente liquide selon la revendication 1, dans laquelle ledit latex à base de polymère est un latex à base de polystyrène.

3. Composition détergente liquide selon la revendication 1, dans laquelle le véhicule est un tensioactif non ionique.

4. Composition détergente liquide selon la revendication 3, dans laquelle ledit tensioactif non ionique est un tensioactif non ionique éthoxylé.

5. Composition détergente liquide selon la revendication 3, dans laquelle ledit tensioactif non ionique est un tensioactif non ionique éthoxylé.

6. Composition détergente liquide selon les revendications 1-5, comprenant aussi des tensioactifs, des adjuvants et d'autres ingrédients détergents facultatifs.

7. Procédé de fabrication d'une composition détergente liquide selon les revendications 1-6, dans lequel les composés de la composition limitant le moussage sont mélangés au préalable avant d'être incorporés dans la composition détergente liquide.

8. Composition détergente liquide selon les revendications 1-6, qui est sous forme d'additif.
